# EUROPÄISCHE PATENTANMELDUNG

(11) **EP 3 291 105 A1**
(43) Veröffentlichungstag der Anmeldung: **07.03.2018**
(21) Anmeldenummer: 16187463.1
(22) Anmeldetag: 06.09.2016
(51) Int. Cl.: G06F 17/30

(54) **VERFAHREN UND VORRICHTUNG ZUR ERMITTLUNG UND DARSTELLUNG DER POSITION EINER IMMOBILIE**

(71) Anmelder: Zoomsquare GmbH, 1160 Wien (AT)
(72) Erfinder: Langegger, Andreas, 1120 Wien (AT); de Gosson de Varennes, Sven Alexis, 1090 Wien (AT); Wiesinger, Gerhard, 1100 Wien (AT)
(74) Vertreter: Puchberger & Partner Patentanwälte

(57) **Zusammenfassung**

Die Erfindung betrifft ein Verfahren zur Ermittlung und Darstellung der Position einer Immobilie sowie ein Computerprogrammprodukt, ein Computersystem und ein tragbares elektronisches Gerät.

## Beschreibung

Die Erfindung betrifft ein Verfahren zur Ermittlung und Darstellung der Position einer Immobilie sowie ein Computerprogrammprodukt, ein Computersystem und ein tragbares elektronisches Gerät.

Insbesondere bei der Online-Suche nach Immobilien stellt sich das Problem, dass die auf den im Internet verfügbaren Angebotsplattformen angeführten Immobilien oft nicht mit ihrer vollständigen Adresse angeführt sind, sondern im Anzeigentext nur näherungsweise Angaben über die Lage der Immobilie gemacht werden. So wird beispielsweise oft nur ein bestimmtes Stadtviertel oder eine Straße angegeben, und die Vorteile der Immobilie werden durch Nähenangaben zu öffentlichen Einrichtungen, Geschäften, Verkehrsknotenpunkten oder anderen Punkten von Interesse erläutert.

Zur Lokalisierung von Adressangaben sind aus dem Stand der Technik Verfahren zur Geolokalisierung bekannt. Diese Verfahren sind geeignet, Adressangaben in unterschiedlicher Form aufzulösen und daraus eine Positionsangabe, insbesondere in Form von Polygonkoordinaten auf einem Stadtplan, zu generieren. Sie scheitern jedoch daran, Näherungsangaben zu verwerten, haben Schwierigkeiten mit mehrdeutigen und fehlerhaften Angaben und sind darauf ausgelegt, aus möglichst exakten Adressangaben exakte Positionsangaben zu liefern. Für den Benutzer wäre aber auch eine näherungsweise Positionsangabe hilfreich.

Weiters sind aus dem Stand der Technik Verfahren zur semantischen Textanalyse bekannt, wobei es möglich ist, den Kontext der erfassten Wörter zu berücksichtigen (sogenanntes Part-of-speech Tagging).

Ein Problem besteht jedoch darin, dass die bekannten Verfahren zur Geolokalisierung Probleme haben, Mehrdeutigkeiten von Adressangaben aufzulösen. So gibt es beispielsweise zahlreiche Orte namens "Loipersdorf" in Österreich, sodass diese Adressangabe für sich nicht eindeutig ist.

Weitere Probleme bestehen bei Mehrdeutigkeiten von Worten an sich (z.B. bezeichnet der Begriff "Holz" unter anderem eine Ortschaft bei Reutte in Tirol) oder bei Doppelangaben (z.B. wenn ein Ortsname mehrfach in der Anzeige genannt ist). Eine besondere Problematik ergibt sich dann, wenn in einer Anzeige unschlüssige Angaben existieren (z.B. Wien, Praterstern, 1080, Schottenfeldgasse - in diesem Fall muss Praterstern ignoriert werden).

Außerdem müssen bei der Analyse von Immobilienanzeigen Postleitzahlen (z.B. 1010 Wien) ebenso interpretiert werden wie Ordinalzahlen bei Bezirken (z.B. 1. Bezirk, Wien). Eine weitere Problematik besteht insbesondere dann, wenn sich der angegebene Ort im Ausland befindet, sodass ein anderes Format der Postleitzahlen verwendet wird.

Ein weiteres Problem ergibt sich dann, wenn in einer Immobilienanzeige Adressangaben aufscheinen, die zueinander nicht in einen schlüssigen geografischen Bezug bringbar sind. Beispielsweise können die Adressangaben "Österreich, Wien, 1160, Schottenring, Augarten" nicht zueinander in einen geografischen Bezug gebracht werden, da die Straße "Schottenring" und der "Augarten" nicht in 1160 Wien liegen. In diesem Fall würde ein herkömmlicher Geolokalisierungs-Algorithmus scheitern.

Ein weiteres Problem besteht darin, dass die bekannten Geolokalisierungs-Algorithmen langsam arbeiten, da nach Eingabe und Verarbeitung einer Adressangabe die Polygonkoordinaten erst durch Abfrage eines externen geografischen Informationssystems (GIS) ermittelt werden müssen.

Aus diesen Gründen scheitern alle bekannten Geolokalisierungs-Algorithmen an der zuverlässigen Lokalisierung auf Grundlage von herkömmlichen Immobilien-Anzeigen im Internet.

Die Aufgabe der Erfindung besteht darin, diese und andere Nachteile der Verfahren aus dem Stand der Technik zu beheben und insbesondere die oben angeführten Probleme zu lösen. Insbesondere besteht die Aufgabe darin, ein Computersystem und ein computerimplementiertes Verfahren zu schaffen, welches auf Basis von mehr oder weniger vollständigen Immobilienanzeigen automatisch eine möglichst exakte Lokalisierung in Form von angezeigten Polygonkoordinaten der angebotenen Immobilie ermöglicht.

Diese und andere Aufgaben werden erfindungsgemäß durch ein Computersystem, ein Verfahren sowie ein Computerprogrammprodukt nach einem der unabhängigen Ansprüche gelöst.

Erfindungsgemäß umfasst das Verfahren zumindest folgende Schritte:

Zunächst wird auf einem Server-Computer für einen betrachteten geografischen Bereich eine topologische Typenhierarchie definiert und in Form eines Datenschemas auf dem Server-Computer gespeichert. Diese topologische Typenhierarchie setzt topologische Typen wie insbesondere Land, Bundesland, politischer Bezirk, Gemeinde oder Stadt, Stadtbezirk, Stadtviertel, Ortschaft, Straße, Ort von Interesse, öffentliche Verkehrslinie und Station des öffentlichen Verkehrs in eine hierarchische absteigende Reihenfolge.

Danach werden eine Vielzahl möglicher Positionsangaben innerhalb des betrachteten geografischen Bereichs, beispielsweise durch Abfrage einer Adressdatenbank, ermittelt. Diese Positionsangaben werden nach der Typenhierarchie klassifiziert und für jede Positionsangabe wird ein Term-Vektor mit Token erzeugt und als Datenobjekt in einer Geotopologie-Datenbank auf dem Server-Computer gespeichert. Bei den Positionsangaben handelt es sich insbesondere um Bezirke, Gemeinden, Städte, Straßen, Orte von Interesse und dergleichen.

Der Begriff "Token" bezeichnet in diesem Zusammenhang unter anderem eine konkrete Adressinformation im Sinne der oben genannten topologischen Typen. Auch Informationen aus der Immobilienanzeige über die Immobilie selbst, beispielsweise "Einbauküche", "Garage" etc., können als Token extrahiert werden.

Für jeden gespeicherten Term-Vektor wird ein externes geografisches Informationssystem zur Ermittlung der dem Term-Vektor zugehörigen Polygonkoordinaten abgefragt, und die ermittelten Polygonkoordinaten werden in der Geotopologie-Datenbank dem Term-Vektor zugeordnet. Bei dem geografischen Informationssystem kann es sich insbesondere um OpenGIS oder TomTom GIS handeln. Die Geotopologie-Datenbank kann insbesondere die Hierarchie-Informationen gemäß der topologischen Typenhierarchie für die einzelnen gespeicherten Term-Vektoren umfassen.

Anschließend wird die zu lokalisierende Immobilienanzeige durch einen Web-Crawler am Server-Computer eingelesen und durch einen vorzugsweise semantischen Text-Parser am Server-Computer analysiert, wobei die relevanten Token durch Vergleich mit den Einträgen der Geotopologie-Datenbank identifiziert werden. Zumindest die im Haupttext der Anzeige genannten Begriffe, die auch in der Geotopologie-Datenbank genannt sind, stellen relevante Token dar. Die identifizierten Token werden nach der topologischen Typenhierarchie geordnet in einem Suchvektor auf dem Server-Computer gespeichert.

Der Suchvektor wird dann mit den in der Geotopologie-Datenbank gespeicherten Term-Vektoren verglichen, wobei die Token des Suchvektors in einer vorbestimmten Reihenfolge permutiert werden, bis der höchstrangige Term-Vektor in der Geotopologie-Datenbank gefunden wird, der mit dem Suchvektor identisch ist. Die dem ermittelten Term-Vektor zugeordneten Polygonkoordinaten werden schließlich durch Abfrage der Geotopologie-Datenbank ermittelt und der weiteren Datenverarbeitung zugeführt, beispielsweise durch Übermittlung an einen Frontend-Server, etwa einen Webserver. Die Polygonkoordinaten können schließlich an einem Client-Computer oder einem tragbaren elektronischen Gerät zur elektronischen Anzeige gebracht werden.

Erfindungsgemäß kann vorgesehen sein, dass in einem weiteren Verfahrensschritt geprüft wird, ob der identifizierte Term-Vektor eine Straße repräsentiert und die Immobilienanzeige eine Hausnummer umfasst. In diesem Fall ist die exakte Adresse der Immobilie bekannt und die zugehörigen Punktkoordinaten können durch einfaches Abfragen eines geografischen Informationssystems ermittelt werden.

Erfindungsgemäß kann vorgesehen sein, dass zur Ermittlung des Suchvektors am Server-Computer durch Abfrage eines externen geografischen Informationssystems die Abstände der aus der Immobilienanzeige extrahierten Token zueinander festgestellt werden, und jene Token, deren Abstand unter einem vordefinierten Schwellwert liegt, zu geografischen Token-Clustern zusammengefasst werden, die als Datenobjekte am Server-Computer gespeichert werden. Diese Token-Cluster können in Folge untersucht und verglichen werden, um jenen Token-Cluster zu bestimmen, der mit höchster Wahrscheinlichkeit das reale Objekt am besten lokalisiert und somit als Suchvektor herangezogen wird. Der Schwellwert kann abhängig vom betrachteten geografischen Bereich sein und beispielsweise 10 km, 5 km, oder 1 km betragen. Abhängig von der geografischen Distanz und/oder der hierarchischen Rangordnung in der Typenhierarchie der ermittelten Token in den Token-Clustern können die Token-Cluster gewichtet werden, um eine Rangordnung der ermittelten Token-Cluster erstellen zu können.

Erfindungsgemäß kann vorgesehen sein, dass bei der Analyse der Immobilienanzeige am Server-Computer eine als Datenobjekt auf dem Server-Computer implementierte Vollanzeige generiert wird, welche neben den relevanten Adress-Token weitere aus der Immobilienanzeige extrahierte Informationen, insbesondere Nähenangaben und Meta-Informationen der Immobilienanzeige, umfasst.

Erfindungsgemäß kann vorgesehen sein, dass die identifizierten Token-Cluster gewichtet werden, wobei zur Gewichtung zunächst die den einzelnen Token der Token-Cluster in der Typenhierarchie übergeordneten Token festgestellt werden, und danach festgestellt wird, ob diese übergeordneten Token in der Vollanzeige, insbesondere in den Meta-Informationen der Vollanzeige, genannt sind. Zur Gewichtung der Token-Cluster kann auch eine vorbestimmte Topologie-Gewichtungs-Korrelationsfunktion herangezogen werden. Diese Funktion quantifiziert die geografische Zugehörigkeit der Token, wobei Token-Cluster, deren Token in der Typenhierarchie näher zusammen liegen, höher gewichtet werden, als Token-Cluster, deren Token in der Typenhierarchie weiter auseinander liegen. Dabei wird für Token, die in der Typenhierarchie einen Pfad bilden, die jeweilige Hierarchieebene in der Typenhierarchie festgestellt. Pfade, deren Token in der Typenhierarchie näher zusammen liegen, werden höher gewichtet als Pfade, deren Token weiter auseinander liegen.

Die Verwendung dieser vorbestimmten Topologie-Gewichtungs-Korrelationsfunktion ermöglicht eine Berücksichtigung der Hierarchieebenen der Token eines Token-Clusters. Auch für Token in der Vollanzeige oder in den Metadaten kann die vorbestimmte Topologie-Gewichtungs-Korrelationsfunktion abgefragt werden, um die Relevanz dieser Token für den betreffenden Token-Cluster festzustellen und diese Token gegebenenfalls in den Suchvektor aufzunehmen.

Dadurch wird der technische Effekt erreicht, dass die Abfrage der Geotopologie-Datenbank wesentlich schneller erfolgen kann. Es müssen nicht mehrere verschiedene Suchvektoren permutiert werden, und unzählige Abfragen durchgeführt werden, sondern es wird schon vor der Abfrage der Datenbank der vielversprechendste Suchvektor gewählt.

Erfindungsgemäß kann vorgesehen sein, dass nach dem Einlesen der Anzeige durch den Web-Crawler am Server-Computer eine semantische Text-Analyse zur Ermittlung von Nähenangaben durchgeführt wird und aus den Nähenangaben zumindest ein weiterer Suchvektor mit vorzugsweise mehreren, nach der Typenhierarchie klassifizierten Token bestimmt wird. Dieser weitere Suchvektor wird seinerseits mit den in der Geotopologie-Datenbank gespeicherten Term-Vektoren verglichen, wobei die Token des weiteren Suchvektors in einer vorbestimmten Reihenfolge permutiert werden, bis der höchstrangige Term-Vektor gefunden wird, der dem weiteren Suchvektor entspricht. Danach werden aus der Geotopologie-Datenbank durch Abfrage des ermittelten Term-Vektors die den Nähenangaben entsprechenden Polygonkoordinaten ermittelt, und die Polygonkoordinaten aus den Adressangaben werden um die Polygonkoordinaten aus den Nähenangaben erweitert oder eingeschränkt, insbesondere mit diesen geschnitten. Zur Verarbeitung der Polygonkoordinaten werden vorzugsweise Funktionen eines externen geografischen Informationssystems eingesetzt. Im Falle einer Verschneidung kann diese je nach Art der Nähenangabe spezifisch sein, da je nach Art der Nähenangabe (explizite Distanzangabe, Fußweg, Stationen des öffentlichen Verkehrs) unterschiedliche Pufferzonen definiert werden können.

Erfindungsgemäß kann vorgesehen sein, dass bestimmte Terme der Suchvektoren aufgrund ihrer Lage im Text der Anzeige höher gewichtet werden.

Diese Berücksichtigung der Nähenangaben erlaubt sowohl eine Einschränkung der aus den Adressangaben identifizierten Polygonkoordinaten, als auch eine Erweiterung. Werden mehrere Nähenangaben in der Immobilienanzeige identifiziert, können als Ergebnis auch mehrere Polygonkoordinaten resultieren. Wenn die resultierenden Polygonkoordinaten überlappen, kann erfindungsgemäß ein Überschneidungsbereich gebildet werden; andernfalls wird erfindungsgemäß eine konkave Hülle um die Polygone gelegt. Dabei kann insbesondere eine Pufferzone rund um den durch die Nähenangabe identifizierten Punkt berücksichtigt werden.

Erfindungsgemäß kann vorgesehen sein, dass das am Server-Computer gespeicherte Datenobjekt der ermittelten Vollanzeige und die ermittelten Polygonkoordinaten als mögliche Position der angebotenen Immobilie über eine Input-/Output-Schnittstelle, vorzugsweise über das Internet, an einen Frontend-Server übermittelt werden. Die Polygonkoordinaten können weiters an einen Client-Computer oder ein tragbares elektronisches Gerät eines Benutzers übermittelt und dort grafisch ausgegeben werden. Die Polygonkoordinaten können aber auch als Datenobjekte oder Textdateien auf automatischem Weg einem anderen Online-Service, wie beispielsweise einem elektronischen Kartenservice, zur weiteren Datenverarbeitung übergeben werden. Erfindungsgemäß kann vorgesehen sein, dass als Art der Nähenangabe ein Punkt von Interesse, eine Straßenkreuzung oder der Name einer Linie oder Station des öffentlichen Verkehrs, optional mit einer Distanzangabe, herangezogen wird.

Erfindungsgemäß kann vorgesehen sein, dass die topologische Typenhierarchie im Server-Computer in Form einer hierarchischen Baumstruktur oder eines Graphen gespeichert ist, wobei die betrachteten topologischen Typen nach einer hierarchischen Ordnung sortiert sind, wobei absteigend von einem höchsten topologischen Typ jedem Typ zumindest ein übergeordneter Typ sowie gegebenenfalls untergeordnete Typen zugeordnet sind.

Erfindungsgemäß kann vorgesehen sein, dass zur Erweiterung der aus den Adressangaben identifizierten Polygonkoordinaten um die aus den Nähenangaben identifizierten Polygonkoordinaten eine konkave Hülle um die Vereinigung der identifizierten Polygonkoordinaten gebildet wird, wobei vorzugsweise Funktionen eines externen geografischen Informationssystems eingesetzt werden.

Erfindungsgemäß kann vorgesehen sein, dass bei der Erweiterung der aus den Adressangaben identifizierten Polygonkoordinaten um die aus den Nähenangaben identifizierten Polygonkoordinaten eine Pufferzone um den Überschneidungsbereich herangezogen wird, wobei die Größe der Pufferzone in Abhängigkeit von den Nähenangaben und/oder in Abhängigkeit von weiteren im Text identifizierten Merkmalen, insbesondere einer identifizierten Distanzangabe, bestimmt wird.

Erfindungsgemäß kann vorgesehen sein, dass die aus den Adressangaben bestimmten Token als Datenobjekte der Form (*t, h, T, C*) ausgeführt sind, wobei *t* den Namen des Ortes, h eine optionale Hausnummer, *T* eine Liste möglicher topologischer Typen, und C eine Liste möglicher Länder bezeichnet. Ebenso können die aus den Nähenangaben bestimmten Token als Datenobjekte (*k, i, d*) ausgeführt sein, wobei *k* die Art der Nähenangabe, *i* eine diesbezügliche Information, und *d* eine Distanz bezeichnet. Als Art der Nähenangabe kann ein in der Nähe liegender Ort oder Punkt von Interesse, eine Straßenkreuzung, der Name einer Linie oder Station des öffentlichen Verkehrs oder eine sonstige Distanzangabe herangezogen werden.

Erfindungsgemäß kann vorgesehen sein, dass die Terme des Suchvektors und gegebenenfalls auch die Terme des zumindest einen weiteren aus den Nähenangaben bestimmten Suchvektors durch Benutzereingaben gebildet oder durch semantische Analyse aus Texten, insbesondere Immobilienanzeigetexten, extrahiert werden.

Erfindungsgemäß kann vorgesehen sein, dass die Geotopologie in Form einer hierarchischen Baumstruktur aufgebaut ist, wobei topologische Typen nach einer hierarchischen Ordnung sortiert sind, wobei absteigend von einem höchsten topologischen Typ jedem Typ zumindest ein übergeordneter Typ sowie gegebenenfalls untergeordnete Typen zugeordnet sind. Die topologischen Typen können Terme umfassen, die als Tupel (T, n, S, Z, g, P, J) ausgeführt sind, wobei T den semantischen Typ bezeichnet, n den Namen, S dessen Synonyme, Z zumindest eine Postleitzahl bei Gemeinden und Bezirken, g eine Geometrie, P die Referenzen zur Definition der Hierarchie, sowie J optionale weitere vorberechnete Daten. Als topologische Typen können das Land, das Bundesland, der politische Bezirk, die Gemeinde oder Stadt, der Stadtbezirk, das Stadtviertel, die Ortschaft, die Straße, einen Ort von Interesse, eine öffentliche Verkehrslinie, eine Station des öffentlichen Verkehrs oder andere Typen vorgesehen sein.

Das erfindungsgemäße Verfahren kann als computerimplementiertes Verfahren, insbesondere als Web-Applikation oder Smartphone-App, ausgeführt sein. Die Erfindung umfasst auch ein Computerprogrammprodukt, umfassend Anweisungen, die bei Ausführung auf einem Server-Computer diesen zur Durchführung eines erfindungsgemäßen Verfahrens veranlassen.

Die Erfindung umfasst ferner ein Computersystem, umfassend einen Server-Computer mit einer topologischen Typenhierarchie und einer Geotopologie-Datenbank sowie ein computerlesbares Speichermedium mit Anweisungen, welche den Server-Computer dazu veranlassen, ein erfindungsgemäßes Verfahren auszuführen.

Die Erfindung umfasst ferner ein derartiges Computersystem mit einem weiteren Computer, beispielsweise einem Frontend-Server wie einem Web-Server, wobei die vom Server-Computer ermittelten Polygonkoordinaten an den Frontend-Server übermittelt und dort gespeichert werden. Die Polygonkoordinaten können dann von einem Client-Computer abgerufen und auf einem Anzeigegerät grafisch ausgegeben werden. Die ermittelten Polygonkoordinaten können auch auf anderem Weg elektronisch verarbeitet werden, beispielsweise in einer weiteren Datenbank gespeichert werden. Erfindungsgemäß vorgesehen ist ebenfalls die automatische Erzeugung von Übersichtsgrafiken, welche die Position angebotener Immobilien auf einem Stadt- oder Umgebungsplan grafisch anzeigt, wobei die erfindungsgemäß ermittelten Polygonkoordinaten als Eingangsdaten verwendet werden.

Die Polygonkoordinaten können auch zur Berechnung statistischer Informationen über die Nachfrage (Immobiliengesuche) und das Angebot (Immobilienanzeigen) in einem bestimmten geografischen Bereich herangezogen werden. Weiters kann unter Rückgriff auf die in der Anzeigedatenbank gespeicherten Daten auch eine Lagebewertung durchgeführt und das Ergebnis der Lagebewertung beispielsweise auf einem Stadtplan grafisch dargestellt werden. Die Informationen können auch an Vermittler von Immobilien automatisch übertragen werden.

Die Erfindung umfasst weiters ein tragbares elektronisches Gerät, umfassend eine Datenverarbeitungseinheit, einen Datenspeicher, eine Kommunikationseinheit, eine Anzeigeeinheit sowie eine vorzugsweise als GPS-Empfänger ausgeführte Lokalisierungseinheit, wobei das Gerät über die Kommunikationseinheit einen Server-Computer zur Ausführung eines erfindungsgemäßen Verfahrens veranlasst, die vom Server-Computer ermittelten Polygonkoordinaten entgegennimmt, durch Abfrage der Lokalisierungseinheit eine Distanz des Geräts zu den empfangenen Polygonkoordinaten berechnet, und auf Grundlage der berechneten Distanz Informationen, insbesondere Informationen über in der Nähe des Geräts befindliche Immobilien, auf der Anzeigeeinheit des Geräts darstellt. Alternativ kann auch das gesamte Verfahren selbst auf dem tragbaren elektronischen Gerät ausgeführt werden, sodass die Typenhierarchie und die Geotopologie-Datenbank selbst auf dem tragbaren elektronischen Gerät implementiert sind, wobei das Gerät zur Ausführung eines erfindungsgemäßen Verfahrens veranlasst wird und die berechneten Polygonkoordinaten selbst darstellt oder weiterverarbeitet.

Weitere erfindungsgemäße Merkmale ergeben sich aus den Patentansprüchen, der Beschreibung der Ausführungsbeispiele und den Figuren. Die Erfindung wird im Folgenden an Hand beispielhafter Ausführungsformen näher erläutert. Die Erfindung beschränkt sich jedoch nicht auf die dargestellten Ausführungsbeispiele, sondern umfasst sämtliche Verfahren und Vorrichtungen im Rahmen der Patentansprüche.

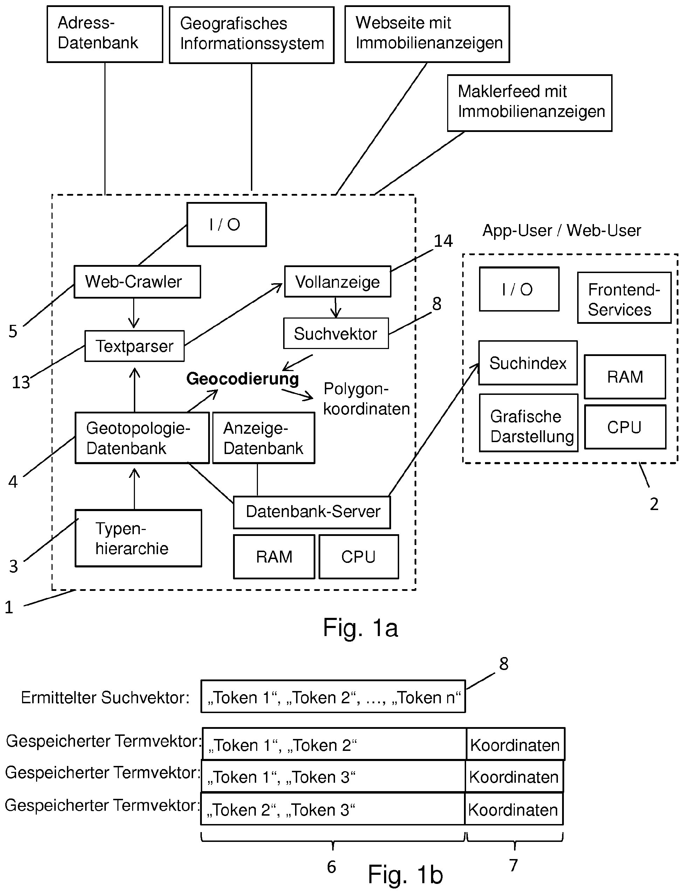

Fig. 1a zeigt eine schematische Darstellung einer Ausführungsform eines erfindungsgemäßen Computersystems. Das Computersystem umfasst einen Server-Computer 1 und einen Frontend-Server 2. Diese beiden Computer verfügen in herkömmlicher Weise über eine CPU, Speicher (RAM) und Input-/Output (I/O)-Schnittstellen und sind vorzugsweise über das Internet miteinander verbunden. Das erfindungsgemäße Verfahren wird zum größten Teil vom Server-Computer 1 ausgeführt; der Frontend-Server 2 dient dazu, dem Benutzer den Zugang zu den aufbereiteten Immobilienanzeigen und den ermittelten Polygonkoordinaten zu verschaffen und kann als Stand-alone PC oder Webserver ausgeführt sein, auf dem eine App oder Web-Applikation zur Abfrage der Polygonkoordinaten ausgeführt wird.

Auf dem Server-Computer 1 ist eine topologische Typenhierarchie 3 hinterlegt. Dabei handelt es sich um ein Datenschema, welches topologische Typen wie insbesondere Land, Bundesland, politischer Bezirk, Gemeinde oder Stadt, Stadtbezirk, Stadtviertel, Ortschaft, Straße, Ort von Interesse, öffentliche Verkehrslinie, oder Station des öffentlichen Verkehrs in eine hierarchische absteigende Reihenfolge setzt. Sämtliche ermittelten Token der Adress- und Nähenangaben werden unter Verwendung dieser Typenhierarchie 3 klassifiziert, wobei jedes Token zumindest einem der topologischen Typen zugeordnet wird. Weiters befindet sich auf dem Server-Computer 1 eine Geotopologie-Datenbank 4, die beispielsweise in Form einer relationalen MySQL-Datenbank implementiert ist, und über einen insbesondere virtuellen Datenbank-Server angesteuert wird. Die Geotopologie-Datenbank 4 umfasst eine Vielzahl von vorab ermittelten Termvektoren 6 mit den entsprechenden Polygonkoordinaten 7. Zum Aufbau der Geotopologie-Datenbank 4 kann vorab eine externe Adressdatenbank abgefragt werden, wobei die Termvektoren jedoch nicht auf eindeutige Immobilien-Adressen beschränkt sind, sondern auch unvollständige Adressangaben enthalten, beispielsweise den Namen eines Stadtviertels, einer Gemeinde, einer Straße oder eines Ortes von Bedeutung. Die Term-Vektoren sind jeweils mit einer eindeutigen ID und den zugeordneten Polygonkoordinaten in der Geotopologie-Datenbank 4 abgespeichert. Die Geotopologie-Datenbank 4 kann regelmäßig mit neuen Term-Vektoren 6 und Polygonkoordinaten 7 befüllt werden, um bessere Ergebnisse zu liefern.

Weiters umfasst der Server-Computer 1 einen Web-Crawler 5, der über eine I/O-Schnittstelle Zugriff auf das Internet hat. Der Web-Crawler 5 durchsucht sowohl Webseiten mit Immobilienanzeigen, als auch Immobilienanzeigen von Maklern (sogenannte Maklerfeeds). Die gefundenen Immobilienanzeigen werden mit den erfassten Meta-Daten der jeweiligen Webseite auf einer Anzeigen-Datenbank des Server-Computers 1 abgespeichert, wobei es sich auch dabei vorzugsweise ebenfalls um eine relationale SQL-Datenbank handelt, die vom Datenbank-Server des Server-Computers 1 angesteuert wird.

Anschließend werden die Texte der Immobilienanzeigen sowie deren Metadaten einer semantischen Textanalyse durch einen Text-Parser 13 unterzogen. Daraus werden die relevanten Token sowie eine Vollanzeige 14 extrahiert.

Als relevante Token werden jene geografischen Angaben der Anzeige extrahiert, die sich im Hauptteil der Immobilienanzeige befinden. Dazu werden die in der Geotopologie-Datenbank 4 befindlichen Begriffe mit dem Text des Hauptteils der Immobilienanzeige verglichen.

Begriffe, die sich in den Metadaten der Anzeige, beispielsweise im Impressum, der URL oder dem Seitenquelltext befinden, werden ebenfalls extrahiert und in der Vollanzeige 14 gespeichert. Die Vollanzeige 14 umfasst somit neben den im Hauptteil der Anzeige selbst aufgefundenen Adress- und Nähenangaben auch weitere Token die zur Lokalisierung der Immobilie herangezogen werden können. Aus dieser Vollanzeige wird dann ein bestimmter Suchvektor 8 für die extrahierten Adressangaben und gegebenenfalls auch ein oder mehrere weitere Suchvektoren 9 für die ermittelten Nähenangaben bestimmt. Die Bestimmung der Suchvektoren 8, 9 erfolgt in mehreren Schritten. Für den Fall, dass im Internet mehrere Anzeigen gefunden wurden, die sich auf eine einzige Immobilie beziehen, werden diese zu einer einzigen, suchbaren Anzeige zusammengefasst und in der Anzeigen-Datenbank des Server-Computers 1 gespeichert. Diese Anzeige-Datenbank wird anschließend über einen Suchindex für Suchservices und andere Frontend-Services des Frontend-Servers 2 dem Benutzer zur Verfügung gestellt.
Fig. 1b zeigt zur Verdeutlichung den beispielhaften Aufbau eines Suchvektors 8 und eines in der Geotopologie-Datenbank 4 hinterlegten Termvektors 6 mit den zugeordneten Polygonkoordinaten 7. Die gespeicherten Termvektoren 6 können eine unterschiedliche Anzahl an Token aufweisen.

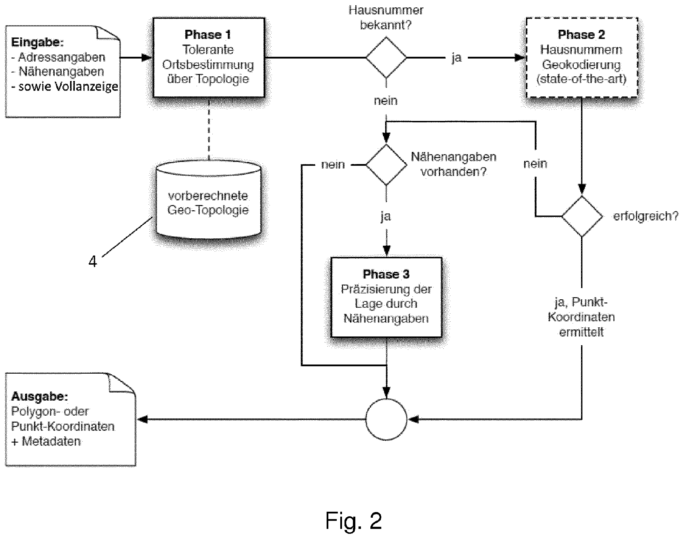

Fig. 2 zeigt ein Ausführungsbeispiel eines erfindungsgemäßen Verfahrens zur Lokalisierung einer Immobilienanzeige. Eingangsparameter des Verfahrens sind Adressangaben und gegebenenfalls Nähenangaben des gesuchten Objekts, welche aus Immobilienanzeigen extrahiert wurden, sowie eine vorberechnete Geotopologie-Datenbank 4. Das Verfahren umfasst im Wesentlichen drei Phasen. In Phase 1 werden die Adressangaben herangezogen, um durch Vergleich mit einer vorberechneten Geotopologie-Datenbank 4 die Geo-Entität zu bestimmen, in der das Objekt liegt.

Je nach Detailgrad der Adressangaben ist diese Geo-Entität, und somit das Ergebnis der Phase 1, eine Straße, Nachbarschaft, Stadtviertel, Stadtbezirk, Gemeinde, Ortschaft, politischer Bezirk, Bundesland, ein ganzes Land oder eine andere Geo-Entität. Das Ergebnis aus Phase 1 kann mehrdeutig sein, so ergibt beispielsweise die Adressangabe (at, Loipersdorf) keine eindeutige Lokalisierung, da es in Österreich mehrere Ortschaften mit dem Namen Loipersdorf gibt. In diesem Fall werden alle möglichen Ergebnisse weiter verarbeitet.

Danach wird geprüft, ob eine der in Phase 1 identifizierten Geo-Entitäten eine Straße repräsentiert und die Adressangabe eine Hausnummer enthält. Ist dies der Fall, dann erfolgt in Phase 2 eine Geokodierung mit diesen Angaben, wobei bekannte Algorithmen zur Geokodierung herangezogen werden. In diesem Fall können in der Regel exakte Punktkoordinaten ermittelt werden, und die Auswertung etwaiger Nähenangaben in Phase 3 ist nicht erforderlich. Sollte in Phase 1 kein exakter Ort mit Straße und Hausnummer ermittelt worden sein, oder falls die Geokodierung in Phase 2 erfolglos war, erfolgt in Phase 3 eine Präzisierung der in Phase 1 durchgeführten Ortsbestimmung auf Basis der eingangs ermittelten oder übermittelten Nähenangaben. In diesem Fall werden als Ergebnis Polygonkoordinaten zurückgeliefert.

Ein Endprodukt des Verfahrens sind Polygonkoordinaten des gesuchten Objekts. Kern des erfindungsgemäßen Verfahrens ist die Ermittlung des bestmöglichen Suchvektors 8 und die korrekte Zuordnung eines möglichst passenden Termvektors 6 aus der Geotopologie-Datenbank 4 zu diesem Suchvektor 8.

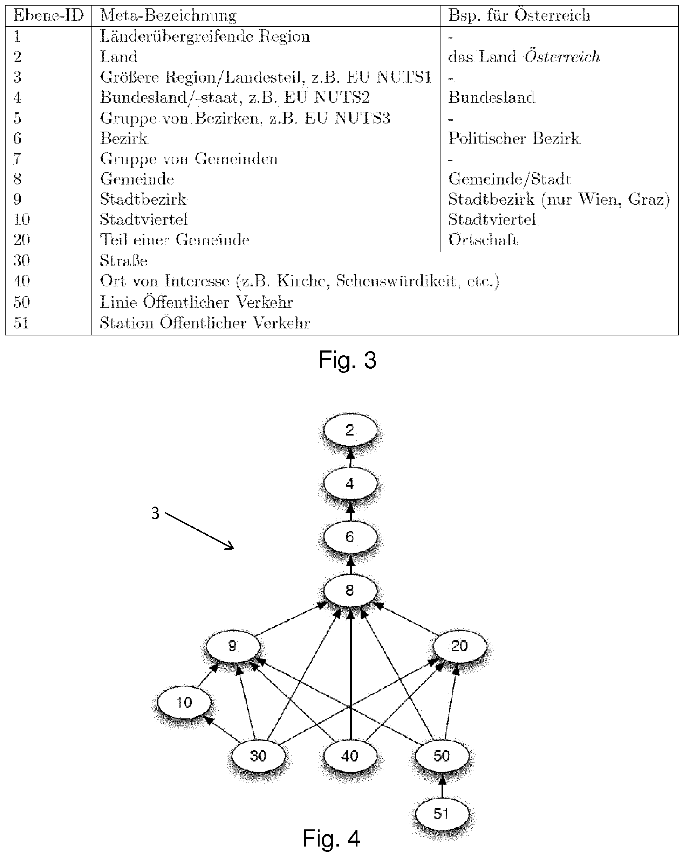

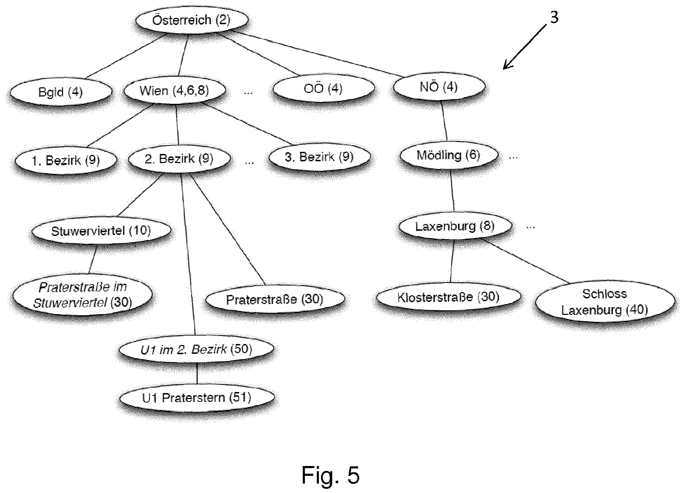

Fig. 3 zeigt die Bezeichnungen der in einem Ausführungsbeispiel des erfindungsgemäßen Systems codierten topologischen Typen einer beispielsweise verwendeten topologischen Typhierarchie 3. Nicht für jedes Land müssen alle Typen Verwendung finden. So werden z.B. für Österreich nur die Typen 2, 4, 6, 8, 9, 10, 20, 30, 40, 50, 51 verwendet. Ebenen mit höherem Typ sind in der Regel Untergruppen von Ebenen mit niedrigerem Typ. Fig. 4 zeigt die auf Grundlage der in Fig. 3 definierten Typen verwendete topologische Typhierarchie 3. Die Erfindung ist aber nicht auf diese hierarchische Ausformung beschränkt. Fig. 5 zeigt einen Ausschnitt aus der konkreten Geotopologie-Datenbank 4 für Österreich auf Grundlage der in Fig. 4 gezeigten topologischen Typhierarchie 3.

Die Ebenen-IDs sind entsprechend der hierarchischen Ordnung sortiert, d.h. ein Elternknoten hat immer eine niedrigere Ebenen-ID als seine Kinder. Manche Begriffe, insbesondere Städtenamen wie "Wien", können mehreren topologischen Typen (hier: Bundesland, Bezirk und Gemeinde) zugeordnet sein. Ebenen ab ID 30, insbesondere Straßen, Orte von Interesse und öffentliche Verkehrslinien, können mehreren Eltern zugeordnet sein - so können z.B. Straßen in Straßensegmente unterteilt und unterschiedlichen Stadtteilen zugeordnet werden (z.B. Mariahilfer Straße 1150 vs. Mariahilfer Straße 1060 vs. Mariahilfer Straße 1070, usw.).

Vor Durchführung des erfindungsgemäßen Verfahrens wird vom Server-Computer 1 eine Menge von Term-Vektoren 6 vorberechnet, wie in Fig. 1 a gezeigt wurde. Ein solcher vorberechneter Term-Vektor 6 besteht aus normalisierten Namen von Bundesländern, Orten, Straßen, etc. Bei der Normalisierung werden unterschiedliche Schreibweisen von Namen auf eine einheitliche Schreibweise abgeändert, um ein gewisses Maß an Toleranz zu erlauben. Für jede mögliche Adresskombination (bis auf Straßenebene, also ohne Hausnummer) wird in der Geotopologie-Datenbank 4 mindestens ein Term-Vektor 6 abgespeichert, um schnelle Abfragen zu ermöglichen. Beispielsweise sind für die Mollardgasse, Mariahilf, Wien folgende Term-Vektoren vorgesehen:
(1) (at, wien, mariahilf, mollardgasse)
(2) (oesterreich, wien, mariahilf, mollardgasse)
(3) (at, wien, mariahilf, 1060, mollardgasse)
(4) (oesterreich, wien, mariahilf, 1060, mollardgasse)
(5) (at, wien, 6., mollardgasse)
(6) (oesterreich, wien, 6., mollardgasse)
(7) (at, wien, 1060, 6., mollardgasse)
(8) (oesterreich, wien, 1060, 6., mollardgasse)
(9) (at, oesterreich, wien, mariahilf, 1060, 6., mollardgasse)

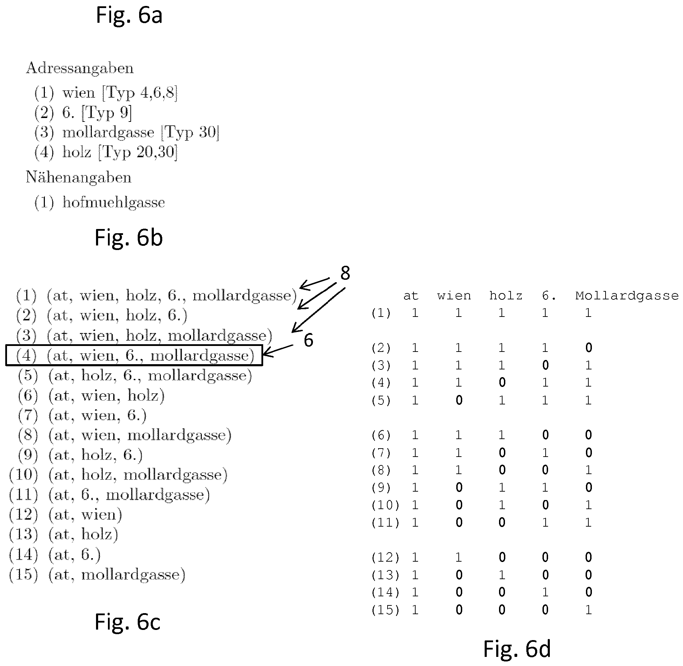

Zur weiteren Beschreibung dient die in Fig. 6a dargestellte Immobilien-Anzeige. Diese wird am Server-Computer 1 durch eine semantische Textanalyse verarbeitet, welche die in Fig. 6b dargestellten Adress- und Nähenangaben liefert.

Die semantische Analyse hat zwar die Adresse des Anbieters aus der Anzeige erkannt und erfolgreich isoliert, allerdings ist fehlerhaft der Begriff Holz als Ortschaft in die Adressangabe aufgenommen worden. Der Suchvektor 8 lautet (Wien, 6., mollardgasse, holz). Gesucht wird nach dem kürzesten in der Geotopologie-Datenbank 4 gespeicherten Term-Vektor 6, der alle Token des Suchvektors 8 enthält. Damit wird gewährleistet, dass jener Ort gefunden wird, der bei den gegebenen Informationen am wahrscheinlichsten gemeint ist, auch wenn einzelne Token eines gespeicherten Term-Vektors 6 möglicherweise nicht berücksichtigt werden.

Für jeden Suchvektor 8 ist über die Typen der Token jene Topologie-Ebene bekannt, auf die er abzielt (im Beispiel die Mollardgasse mit Ebenen-ID 30). Deshalb werden bei der Suche prinzipiell nur jene Term-Vektoren aus der Geotopologie-Datenbank 4 betrachtet, die diese Topologie-Ebene auch referenzieren.

Die einzelnen Token des Suchvektors 8 werden in Folge permutiert und es wird für verschiedene Teilmengen des ursprünglichen Suchvektors 8 getestet, ob ein Term-Vektor 6 innerhalb der Geotopologie-Datenbank 4 bekannt ist. Ein solcher Test entspricht der Suche nach dem kürzesten Term-Vektor 6, der sämtliche Terme des permutierten Suchvektors 8 enthält. Bei der Erstellung der Permutationsliste wird einer vordefinierten Typen-Rangordnung gefolgt. So kann vorgesehen sein, dass der Typ Land die höchste Priorität besitzt, während die Typen Bundesland und Straße jeweils niedrigere Priorität aufweisen. Die Terme werden dann in der Reihenfolge ihrer Rangordnung permutiert. Insbesondere kann vorgesehen sein, dass die Geo-Entität Straße die niedrigste Priorität aufweist, gefolgt von Nachbarschaft, Stadtviertel, Stadtbezirk, Gemeinde, Ortschaft, Politischer Bezirk, Bundesland sowie Land. Einzelne Geo-Entitäten können auch gleiche Prioritäten aufweisen. Die Liste an Permutationen ist bei dem vorliegenden Ausführungsbeispiel in Fig. 6c dargestellt. Im vorliegenden Ausführungsbeispiel wird bereits beim vierten permutierten Suchvektor 8 ein identischer Term-Vektor 6 (at, wien, 6., mollardgasse) in der Geotopologie gefunden, welcher sämtliche Terme des permutierten Suchvektors enthält. Die zur Erstellung der Permutationsliste abgearbeitete Systematik ist in Fig. 6d schematisch dargestellt. Je nach Priorisierung der Typenordnung kann auch eine andere Systematik entstehen. So kann insbesondere vorgesehen sein, dass die Reihenfolge der Typen, die zuerst getestet werden, je nach Land unterschiedlich ist.

Um die Dauer der Datenbankabfragen zu reduzieren, können verschiedene Strategien bei der Erstellung der Permutationsliste eingesetzt werden. Insbesondere kann eine Mindest- und Maximal-Anzahl an Token für die Permutationsliste vorgesehen sein. Weiters können schon in der semantischen Textanalyse einzelne Token höher oder niedriger gewichtet werden, um diesen in den Permutationen vor- oder nachrangig zu behandeln. Die Leistungsfähigkeit der vorgesehenen Permutationsregeln kann auch vorab mit beispielhaften Datenbankabfragen getestet werden (preflight tests). Neben der Adressangabe findet sich in der Immobilienanzeige gemäß Fig. 6a auch eine Nähenangabe "hofmuehlgasse". Diese kann einerseits zur Präzisierung des Suchvektors 8, und andererseits zur Präzisierung der aus den Adressangaben ermittelten Polygonkoordinaten 7 benutzt werden. Zu diesem Zweck umfasst die Geotopologie-Datenbank 4 auch Orte von Interesse wie Kirchen, Schulen, Veranstaltungshallen, Bahnhöfe, Verwaltungsgebäude oder Sehenswürdigkeiten, da diese bevorzugt als Nähenangaben verwendet werden.

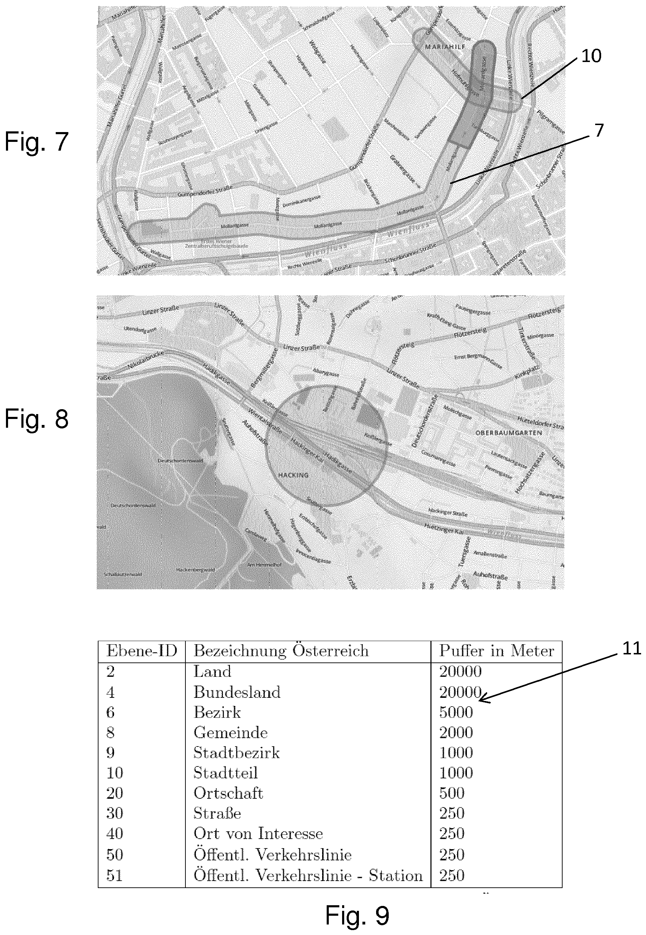

Zur Präzisierung der aus den Adressangaben ermittelten Polygonkoordinaten 7 werden diese mit den aus den Nähenangaben ermittelten Polygonkoordinaten 10 verschnitten, wobei vorhandene Funktionen von Geoinformationssystemen wie OpenGIS oder TomTom benutzt werden. Das Verfahren zur Ermittlung der Polygonkoordinaten 10 aus den Nähenangaben entspricht dem Verfahren zur Ermittlung der Polygonkoordinaten 7 aus den Adressangaben. Im gegebenen Beispiel aus Fig. 6a konnte im Bezugsraum Wien eine Straße mit dem Namen Hofmuehlgasse gefunden werden. Die Verschneidung der in Phase 1 aus den Adressangaben ermittelten Polygonkoordinaten 7 mit den aus den Nähenangaben ermittelten Polygonkoordinaten 10 ergibt das in Fig. 7 gezeigte Resultat, nämlich ein erweitertes Polygon, welches die Adressen in der Mollardgasse nähe Hofmühlgasse umfasst.

Bei der Verschneidung der Polygonkoordinaten wird je nach Art der Nähenangabe unterschiedlich verfahren: Im Fall der Angabe einer Nähe zu einem bestimmten Ort werden die Polygonkoordinaten 10 wie in Phase 1 über Term-Vektoren aus der Geotopologie-Datenbank 4 bestimmt. Zum Beispiel sei gegeben: Bezugsraum Mariahilf (bestimmt über Mollardgasse) und Nähenangabe aus dem Beispiel (nearby, hofmuehlgasse), ergibt Anfrage-Vektor (at, wien, mariahilf, hofmuehlgasse) der hier zu einem Ergebnis führt.

Die in der Geotopologie-Datenbank 4 gespeicherten Polygonkoordinaten 10 werden nun mit einer Pufferzone 11 einer vorbestimmten Größe vergrößert. Im Fall einer Kreuzungsangabe werden zwei Straßen auf Basis des Bezugsraums wie in Phase 1 abgefragt. Die Straßen werden ebenfalls mit einer Pufferzone 11 versehen und die resultierenden Polygonkoordinaten werden verschnitten.

Im Fall einer Verkehrslinie, z.B. U4, bilden alle Stationen im Bezugsraum das Ergebnis. Die Polygonkoordinaten werden mit einer Pufferzone 11, die den Umkreis der Station beschreiben, versehen. Im Fall einer Station des öffentlichen Verkehrs, z.B. Westbahnhof, bilden alle Stationen im Bezugsraum mit diesem Namen das Ergebnis, wobei die Polygonkoordinaten um eine vorbestimmte Pufferzone 11 erweitert werden. In dem Fall, dass eine Verkehrslinie mit Station angegeben wird, z.B. U4 Hütteldorf, wird nur die Station Hütteldorf der Linie U4 im Bezugsraum selektiert und deren Punkt gepuffert, sodass ein Kreis entsteht (beispielhaft in Fig. 8 dargestellt).

Abschließend werden die gegebenenfalls gepufferten Polygonkoordinaten 10 der Ergebnisse der einzelnen Nähenangaben kombiniert, indem eine konkave Hülle darüber gebildet wird. Die Pufferzone 11 wird entweder durch eine in der jeweiligen Nähenangabe optional vorhandene Distanz d (Meter oder Minuten - im letzteren Fall wird auf Luftlinien-Meter bei Gehgeschwindigkeit umgerechnet) bestimmt oder auf Basis der Ebenen-ID des Ergebnisses: je größer der Bezugsraum, desto größer die Pufferzone 11 in Meter. Ein Beispiel für die Werte der Pufferzone 11 für Österreich ist in Fig. 9 gegeben.

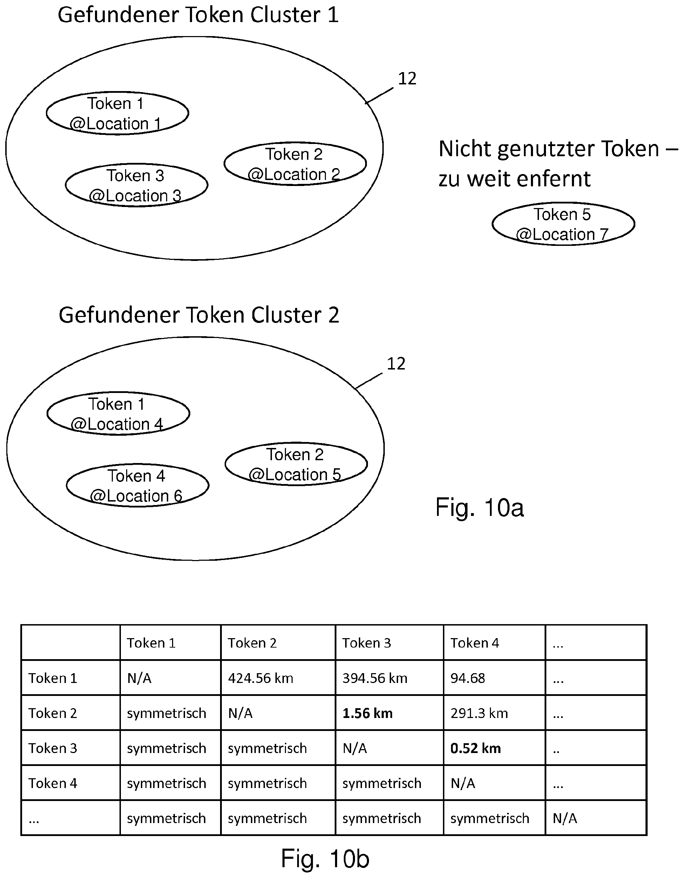

Fig. 10a - 10b zeigen eine weitere Ausführungsform des erfindungsgemäßen Verfahrens für den Fall, dass der Suchvektor aufgrund mehrdeutiger Adress-Token nicht eindeutig bestimmt werden kann.
So kann es vorkommen, dass Token extrahiert werden, die mehrere mögliche Adressangaben referenzieren. Ein Beispiel wären die Token "Salzburg, Hauptstrasse, Zehnhausen bei Rennerod, Berlin, Innsbruck": Der Ort "Salzburg" existiert sowohl in Österreich als auch in Deutschland, nämlich im Westerwaldkreis. Die Strasse "Hauptstrasse" existiert in zahlreichen Orten in Österreich und Deutschland. Der Suchvektor würde nicht zu eindeutigen Ergebnissen führen und muss klargestellt werden.

Die folgende Tabelle zeigt mögliche Token zur Ermittlung des Suchvektors 8, wobei die Topologie-Hierarchie den Bezeichnungen in Fig. 3 entspricht und die eindeutigen Topologie-Hierarchie-IDs der Geotopologie-Datenbank entnommen wurden:

| Token | Topologie-Level | Topologie-Hierarchie IDs |
|---|---|---|
| Salzburg | 6,8 | {3458291948, 895838530} |
| Hauptstrasse | 30 | {423984728, 9847239847, etc} |
| Zehnhausen bei Rennerod | 8 | {1276032423458} |
| Berlin | 6,8 | {43183742, 472983748} |
| Innsbruck | 8 | {104000003c3} |

Um in diesem Fall einen eindeutigen Suchvektor 8 zu bestimmen, wird die geografische Nähe zwischen den Tokens, welche zur Bildung des Suchvektors zur Verfügung stehen, festgestellt. Zu diesem Zweck werden zunächst die gefundenen Token nach ihrer gegenseitigen Distanz zu sogenannten Token-Clustern 12 zusammengefasst. Dies erlaubt auch dann einen Rückschluss auf die Relevanz von einzelnen Token, wenn diese Token nicht in der Geotopologie-Datenbank 4, jedoch im externen Geoinformations-System vorhanden sind. In einem ersten Schritt wird im obigen Beispiel die Distanz zwischen Salzburg (ID: 3458291948) und anderen potentiellen Token-Kandidaten ermittelt:

| **Token 1 + GeoID** | **Token 2 + GeoID** | **Abstand** |
|---|---|---|
| Salzburg(1) 3458291948 | Salzburg(2) 895838530 | 424.56 km |
| Salzburg(1) 3458291948 | Hauptstrasse(1) 423984728 | 394.56 km |
| Salzburg(1) 3458291948 | Hauptstrasse(2) 9847239847 | 94.68 km |
| Salzburg(1) 3458291948 | Zehnhausen bei Rennerod(1) (1276032423458) | 593.52 km |
| Salzburg(1) 3458291948 | Berlin(1) (1276000657ca14) | 752.57 km |
| Salzburg(1) 3458291948 | Berlin(2) (472983748) | 754.57 km |
| Salzburg(1) 3458291948 | Innsbruck(1) (104000003c3) | 80.5km |

Das Token Salzburg (ID: 3458291948) ist in diesem Beispiel in keinem gültigen Abstand zu einem der anderen Tokens, da die Distanz stets einen voreingestellten Schwellwert übersteigt.

Dieses Token wird daher als möglicher Kandidat für die weitere Betrachtungsweise nicht mehr weiter verfolgt. Im nächsten Schritt wird im obigen Beispiel die Distanz zwischen Salzburg im Westerwaldkreis (ID: 3458291948) und anderen potentiellen Token-Kandidaten ermittelt:

| **Token 1 + GeoID** | **Token 2 + GeoID** | **Abstand** |
|---|---|---|
| Salzburg(2) 895838530 | Hauptstrasse(1) 423984728 | 1.56 km |
| Salzburg(2) 895838530 | Hauptstrasse(2) 9847239847 | 291.3 km |
| Salzburg(2) 895838530 | Zehnhausen bei Rennerod(1) (1276032423458) | 0.52 km |
| Salzburg(2) 895838530 | Berlin(1) (1276000657ca14) | 452.57 km |
| Salzburg(2) 895838530 | Berlin(2) (472983748) | 470.30 km |
| Salzburg(2) 895838530 | Innsbruck(1) (104000003c3) | 90.2 km |

Das im Westerwaldkreis gelegene Salzburg (ID: 895838530) ist sowohl innerhalb eines Distanz-Schwellwerts des Tokens Hauptstrasse (ID: 423984728) als auch des Tokens Zehnhausen bei Rennerod (ID: 1276032423458). Der Schwellwert kann in Abhängigkeit des betreffenden Tokens gewählt werden. Es wird daher folgender Cluster mit der Nummer 1 definiert:
Cluster(1): { Salzburg(2) 895838530, Hauptstrasse(1) 423984728, Zehnhausen bei Rennerod(1) 1276032423458}.

Fig. 10a zeigt schematisch, wie am Beispiel von fünf Tokens zwei unabhängige Token-Cluster gebildet werden. Eines der Token ist in diesem Beispiel zu weit von allen anderen Tokens entfernt und wird somit nicht weiter berücksichtigt. Fig. 10b zeigt eine im Zuge dieses Verfahrens berechnete Distanz-Korrelations-Matrix, wobei gültige Distanzen, welche einen vorbestimmten Schwellwert unterschreiten, fett gekennzeichnet sind. Aus dieser Matrix können sämtliche Token-Cluster 12 bestimmt werden. Auf Grundlage der ermittelten Token-Cluster 12 wird der wahrscheinlichste Suchvektor 8 bestimmt.

Wenn, wie im vorliegenden Beispiel gemäß Fig. 10a, mehrere mögliche Token-Cluster 12 identifiziert wurden, werden die einzelnen Token-Cluster 12 weiter ergänzt bzw. verfeinert, um den wahrscheinlichsten Suchvektor festzustellen.

Zu diesem Zweck wird der erste Token-Cluster 12 in der Geotopologie-Datenbank 4 aufgesucht und es wird in der Topologie-Hierarchie 3 des geografischen Bereichs nach gemeinsamen Token höherer Rangordnung gesucht. So wird durch Abfrage der Geotopologie-Datenbank 4 festgestellt, dass die Token Salzburg (ID: 895838530), Hauptstrasse (ID: 423984728) und Zehnhausen bei Rennerod (ID: 1276032423458) alle im Westerwaldkreis, sowie in Deutschland sind. Die zusätzlichen gemeinsamen Token Westerwaldkreis und Deutschland werden dem Cluster hinzugefügt, dieser umfasst somit nach der Verfeinerung die folgenden Token:
Salzburg 895838530, Hauptstrasse 423984728, Zehnhausen bei Rennerod (1276032423458), Westerwaldkreis (1276000345333), Deutschland (12760000345cf32). Der Token-Cluster wurde somit vervollständigt und umfasst statt drei nun fünf Token.

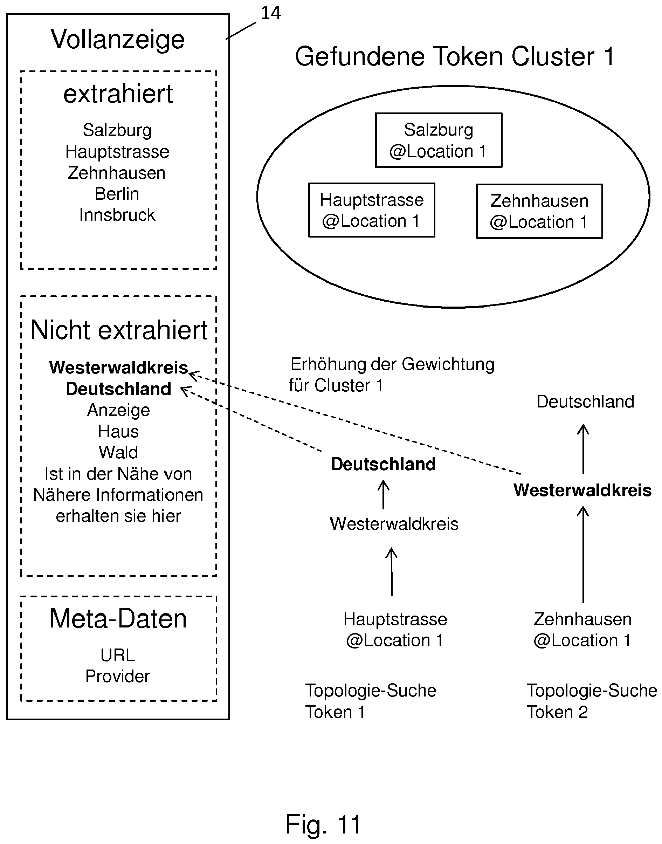

In einem weiteren, in Fig. 11 schematisch dargestellen Schritt wird eine Gewichtung der Token-Cluster 12 vorgenommen, indem untersucht wird, ob die einzelnen Token auch in der gesamten, vorab generierten Vollanzeige vorhanden sind. Für den Fall, dass das Token in der Vollanzeige existiert, wird die Gewichtung des Clusters erhöht. Da das Token "Westerwaldkreis" in der Vollanzeige enthalten ist, wird weiters über alle Kinder von "Westerwaldkreis" innerhalb der Topologie durchiteriert und es werden wiederum alle gefunden Kinder innerhalb der Topologie in der Vollanzeige aufgesucht. Im Falle eines Fundes in der Vollanzeige 14 wird das Gewicht des Token-Clusters 12 weiter erhöht. Im vorliegenden Beispiel finden sich sowohl ausgehend vom Token Hauptstrasse (ID: 423984728), als auch ausgehend vom Token Zehnhausen bei Rennerod (1276032423458) hierarchisch übergeordnete Begriffe ("Deutschland", "Westerwaldkreis"), die in der Vollanzeige 14 enthalten sind. Somit wird die Gewichtung dieses Token-Clusters 12 erhöht.

Da die in diesem Verfeinerungsschritt ermittelten Token, im vorliegenden Beispiel "Deutschland" und "Westerwaldkreis", nicht in der extrahierten Tokenliste vorhanden sind, wird nun ein weiteres Mal die gespeicherte Originalanzeige nach Synonymen, z.B. "De","DEU", "Germany" durchsucht und gegebenenfalls die Gewichtung des Token-Clusters erhöht.

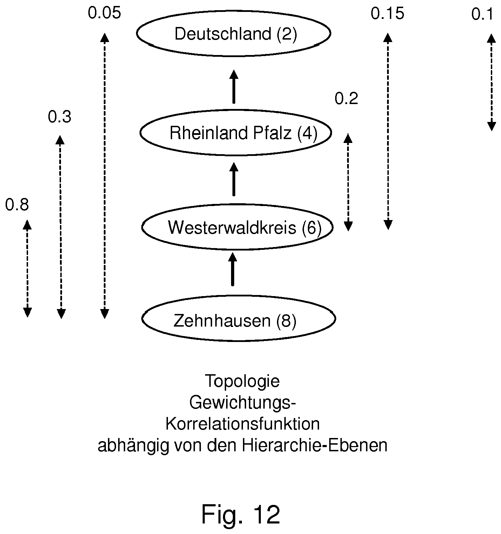

Für die konkrete Gewichtung kann eine vorbestimmte Topologie-Gewichtungs-Korrelationsfunktion eingesetzt werden. Diese bestimmt für jedes mögliche Topologie-Level-Paar einen Gewichtungswert, wobei der Gewichtungswert umso höher ist, je näher die Topologie-Level zueinander liegen. Fig. 12 zeigt eine beispielhafte Topologie-Gewichtungs-Korrelationsfunktion, bei der beispielsweise Level 8 zu Level 2 einen Gewichtungswert von 0,05 und Level 8 zu Level 6 einen Gewichtungswert von 0,8 aufweisen. Finden sich in der Anzeige, insbesondere auch in den Nähenangaben oder in den Metadaten, hierarchisch eng zusammenliegende Token (z.B. Zehnhausen und Westerwaldkreis), so wird die Gewichtung der entsprechenden Token-Cluster stärker erhöht (im vorliegenden Beispiel 0,8), als im Fall lose zusammenhängender Token (z.B. Zehnhausen und Deutschland: 0,05). Dadurch wird zusätzlich zur geografischen Nähe auch die hierarchische Zusammengehörigkeit der gefundenen Token berücksichtigt.

Für den Fall, dass in der Anzeige Nähenangaben ermittelt werden, werden jene Token-Cluster höher gewichtet, deren Distanz unterhalb eines Schwellwerts zu dem betreffenden Token sind. Wenn beispielsweise in der Anzeige die zwei Token-Cluster 12, nämlich (Wien, Mariahilferstrasse) und (Salzburg, Guggenthal) ermittelt werden, und die Nähenangabe lautet "nah zum Schloss Mirabell", dann wird der zweite Token-Cluster höher gewichtet, da Schloss Mirabell in Salzburg liegt und deshalb den gemeinsamen übergeordneten Token "Salzburg" aufweist. Wäre die Nähenangabe "Schneeberg", würde kein Cluster übereinstimmen und die Nähenangabe wird ignoriert.

Für den Fall, dass das Nähenangaben-Token ein Distanz und ein Einheitenattribut besitzt, wird der Cluster anhand der Attribute entsprechend gewichtet. Dies wird nur dann durchgeführt, wenn die Nähenangabe innerhalb einer gewissen Schranke inkl. Toleranzbereich relativ zu der Region des Clusters steht. Beispiel: (Wien, 1070) repräsentiert die Region vom Postleitzahlenbereich 1070 (als möglichst genaues Token in dem Cluster) und wird mit einem Puffer von z.B. 200 m erweitert. Wenn in der Anzeige eine Transport-Methode (Auto, zu Fuß, etc.) angegeben ist, wird die Puffergröße insofern bestimmt, dass die theoretisch mögliche Fahrgeschwindigkeit in dem Cluster sowie der Umgebung bestimmt wird. Eine weitere Verfeinerung wird vorgenommen, in dem Geschwindigkeitsbegrenzungen aus dem geografischen Informationssystem mit in die Berechnung einfließen. Für die Berechnung dieser Geschwindigkeitsgrenzen werden eventuell vorhandene Einheiten genutzt.

Im folgenden Beispiel wird eine konkrete Immobilienanzeige behandelt:
Titel: Wohnung - Birkenallee
Vollanzeigentext: Die Wohnung ist nahe dem Tierpark (800 m) in Frankfurt an der Oder und ist gut mit 10/12 erreichbar.
Weiterer Text: Kategorie: Appartements in Berlin
Metadaten:
   <script> $("content-box").text("Sehenswürdigkeit: Stadion an der Alten Försterei, Gärten der Welt"); </script>

**Extrahierte Token:** Birkenallee, Frankfurt an der Oder, Berlin
**Extrahierte Nähenangaben:** Tierpark (Dieses Token bekommt das Attribut "distance" für die Distanz, welches 200 ist sowie das Attribut "unit" für die Einheit, in diesem Fall "m" für Meter), 10, 12
**Nicht identifizierte Token:** Stadion an Der Alten Försterei, Gärten der Welt

Als auf dem Server-Computer 1 gespeichertes Datenobjekt sieht eine Näheangabe wie folgt aus:

```
 { "place": "Tierpark",
       "distance": 200,
       "unit": "m", // m, km, ft, yard, mile, minutes, hours
       "type": "nearby", // pt_ line, pt_station etc
       "transport_method": null, // could be walking, car, public_transport, bicycle
       "distance_refers_to": null, // could be that we have Birkenallee, 400m neben der
       U3, would then be "U3"
       "_weight": 354,
       "_desc": true }
```

Es werden die Token Birkenallee, Frankfurt an der Oder und Berlin ermittelt. Die Straße "Birkenallee" existiert sowohl in Frankfurt an der Oder, als auch in Berlin. Es werden somit folgende Token-Cluster ermittelt:
Cluster 1: Birkenallee, Frankfurt an der Oder
Cluster 2: Birkenallee, Berlin
Für diese beiden Token-Cluster 12 werden die ermittelten Nähenangaben zur Verfeinerung herangezogen.

Dabei werden jeweils die Distanzen der Token zu den Nähenangaben berechnet, und die Token-Cluster 12 werden um jene Nähenangaben-Token erweitert, deren Distanz unterhalb eines bestimmten Schwellwerts liegt:

| **Cluster** | **Token - Token** | **Distanz** |
|---|---|---|
| 1 | Birkenallee - 10 | 79km |
| 1 | Birkenallee - 12 | 11km |
| 1 | Birkenallee - Tierpark | 4.8km |
| 1 | Frankfurt an der Oder - 10 | 69km |
| 1 | Frankfurt an der Oder - 12 | 1 km |
| 1 | Frankfurt an der Oder - Tierpark | 2.3km |
| 2 | Birkenallee - 10 | 30km |
| 2 | Birkenallee - 12 | 11km |
| 2 | Birkenallee - Tierpark | 0.7km |
| 2 | Berlin - 10 | 1km |
| 2 | Berlin - 12 | 11km |
| 2 | Berlin - Tierpark | 4.6km |

Daraus ergeben sich folgende erweiterte Token-Cluster:
Token-Cluster 1: Birkenallee, Frankfurt an der Oder, Deutschland, 12, Tierpark
Token-Cluster 2: Birkenallee, Berlin, 10, Deutschland, Tierpark Nachdem die Cluster-Token über die Topologie-Hierarchie aufgelöst wurden, kann die Station "Der Alten Försterei" und "Gärten der Welt" zum Token-Cluster 2 zugeordnet werden, da diese nahe den anderen Token sind (Birkenallee und Berlin) und somit eine eindeutige Zuordnung zu Cluster 2 möglich ist.
Um mögliche falsche, positive Ergebnisse auf Grund von fehlenden Information zu vermeiden (z.B. könnte "Gärten der Welt" eine kürzlich eröffnete Ladenkette sein, die noch nicht in der Datenbank vorhanden ist) wird weiters das oben angeführte Distanz-Attribut des Token "Tierpark" mit 200 m verwendet. Im Detail ergibt sich, dass Cluster 2: Birkenallee 700 m vom "Tierpark" entfernt ist, was ungefähr dem Distanz-Attribute der Originalanzeige oder der Suchanfrage entspricht. Dies verhindert weiters die Wahrscheinlichkeit von falschen, positiven Ergebnissen.

In einem weiteren Beispiel wird die Mehrdeutigkeit nur anhand von Nähenangaben in der Vollanzeige bzw. den Metadaten aufgelöst:
**URL:** http://www.someestateportal.com/estates/immobilie-in-9020
**Vollanzeigentext:** Appartement nähe Bahnhofstraße, Burggasse nicht zu weit entfernt vom Hauptbahnhof
**Extrahierte Token:** <keine>
**Extrahierte Nähenangaben:** Bahnhofstraße, Burggasse, Hauptbahnhof
**Nicht identifizierte Token:** 9020

Es gibt viele Orte, die sowohl eine Bahnhofstraße als auch einen Hauptbahnhof nebeneinander haben. Es werden folgende Token-Cluster gefunden:

| **Cluster** | **Token** | **Kommentar** |
|---|---|---|
| 1 | Bahnhofstraße, Burggasse, Hauptbahnhof | Die Token sind in Klagenfurt am Wörthersee vorhanden |
| 2 | Bahnhofstraße, Hauptbahnhof | Die Token sind in Berlin vorhanden |
| 3 | Bahnhofstraße, Hauptbahnhof | Die Token sind in Wien vorhanden |
| 4 | etc. | etc. |

Cluster 1 kann mit Token, welche sich durch Abfrage hierarchisch übergeordneter Token aus der Geotopologie-Datenbank ergeben, erweitert werden:

| **Cluster** | **Token** | **Distanz** |
|---|---|---|
| 1 | Viktringer Vorstadt | 0.8km |
| 1 | Klagenfurt am Wörthersee | 3km |
| 1 | 9020 | 0.2km |

Cluster 1 wird durch das in der Vollanzeige gefundene Token "9020" aufgewertet, was eine eindeutige Geokodierung zu Gunsten von Cluster 1 zulässt.

## Patentansprüche

1. Verfahren zur Ermittlung der Polygonkoordinaten einer in einer Immobilienanzeige im Internet angeführten Immobilie, **dadurch gekennzeichnet, dass** für einen betrachteten geografischen Bereich
a. eine topologische Typenhierarchie (3) definiert und in Form eines Datenschemas auf einem Server-Computer (1) gespeichert wird,
b. eine Vielzahl möglicher Positionsangaben des betrachteten geografischen Bereichs, beispielsweise durch Abfrage einer Adressdatenbank, ermittelt wird, diese Positionsangaben nach der Typenhierarchie (3) klassifiziert und für jede Positionsangabe ein Term-Vektor (6) mit Token erzeugt und in einer Geotopologie-Datenbank (3) auf dem Server-Computer (1) gespeichert wird, sowie
c. für jeden Term-Vektor (6) ein geografisches Informationssystem zur Ermittlung der dem Term-Vektor (6) zugehörigen Polygonkoordinaten (7) abgefragt wird und die ermittelten Polygonkoordinaten (7) in der Geotopologie-Datenbank (4) dem Term-Vektor (6) zugeordnet werden,
d. die Immobilienanzeige durch einen Web-Crawler (5) am Server-Computer (1) eingelesen und durch einen Text-Parser (13) analysiert, wobei durch Vergleich mit der Geotopologie-Datenbank (4) relevante Token identifiziert werden, und diese Token nach der Typenhierarchie geordnet in einem Suchvektor (8) auf dem Server-Computer (1) gespeichert werden,
e. der Suchvektor (8) mit den in der Geotopologie-Datenbank (4) gespeicherten Term-Vektoren (6) verglichen wird, wobei die Token des Suchvektors (8) in einer vorbestimmten Reihenfolge permutiert werden, bis der höchstrangige Term-Vektor (6) gefunden wird, der dem Suchvektor (8) entspricht,
f. die dem ermittelten Term-Vektor (6) zugeordneten Polygonkoordinaten (7) durch Abfrage der Geotopologie-Datenbank (4) ermittelt werden.

2. Verfahren nach Anspruch 1, **dadurch gekennzeichnet, dass** zur Ermittlung des Suchvektors (8) am Server-Computer (1) durch Abfrage eines externen geografischen Informationssystems die Abstände der aus der Immobilienanzeige extrahierten Token zueinander festgestellt werden, und jene Token, deren Abstand unter einem vordefinierten Schwellwert liegt, zu geografischen Token-Clustern (12) zusammengefasst werden, die als Datenobjekte am Server-Computer (1) gespeichert und zur Bestimmung des Suchvektors (8) herangezogen werden.

3. Verfahren nach einem der Ansprüche 1 oder 2, **dadurch gekennzeichnet, dass** bei der Analyse der Immobilienanzeige in Schritt d) am Server-Computer (1) eine als Datenobjekt auf dem Server-Computer (1) implementierte Vollanzeige (14) generiert wird, welche neben den relevanten Adress-Token weitere aus der Immobilienanzeige extrahierte Informationen, insbesondere Nähenangaben und Meta-Informationen der Immobilienanzeige, umfasst.

4. Verfahren nach Anspruch 2 oder 3, **dadurch gekennzeichnet, dass** die identifizierten Token-Cluster (12) gewichtet werden, wobei zur Gewichtung zunächst die den einzelnen Token der Token-Cluster (12) in der Typenhierarchie (3) übergeordneten Token festgestellt werden, und danach festgestellt wird, ob diese übergeordneten Token in der Vollanzeige (14), insbesondere in den Meta-Informationen der Vollanzeige (14), genannt sind.

5. Verfahren nach einem der Ansprüche 2 bis 4, **dadurch gekennzeichnet, dass** die identifizierten Token-Cluster (12) gewichtet werden, wobei zur Gewichtung der Token-Cluster (12) vorab eine Topologie-Gewichtungs-Korrelationsfunktion definiert wird, welche die geografische Zugehörigkeit der Token quantifiziert, wobei Token-Cluster (12), deren Token in der Typenhierarchie (3) näher zusammen liegen, höher gewichtet werden, als Token-Cluster (12), deren Token in der Typenhierarchie (3) weiter auseinander liegen.

6. Verfahren nach einem der Ansprüche 1 bis 5, **dadurch gekennzeichnet, dass**
a. nach dem Einlesen der Anzeige durch den Web-Crawler (5) am Server-Computer (1) eine semantische Text-Analyse zur Ermittlung von Nähenangaben durchgeführt wird,
b. aus den Nähenangaben zumindest ein weiterer Suchvektor (9) mit vorzugsweise mehreren, nach der Typenhierarchie (3) klassifizierten Token bestimmt wird,
c. der weitere Suchvektor (9) mit den in der Geotopologie-Datenbank (4) gespeicherten Term-Vektoren (6) verglichen wird, wobei die Token des weiteren Suchvektors (9) in einer vorbestimmten Reihenfolge permutiert werden, bis der höchstrangige Term-Vektor gefunden wird, der dem weiteren Suchvektor (9) entspricht,
d. aus der Geotopologie-Datenbank (4) durch Abfrage des ermittelten Term-Vektors die den Nähenangaben entsprechenden Polygonkoordinaten (7) ermittelt werden,
e. die Polygonkoordinaten (7) aus den Adressangaben um die Polygonkoordinaten (10) aus den Nähenangaben erweitert oder eingeschränkt, insbesondere mit diesen geschnitten, werden, wobei zur Verarbeitung vorzugsweise Funktionen eines externen geografischen Informationssystems eingesetzt werden, und wobei im Falle einer Verschneidung diese insbesondere je nach Art der Nähenangabe spezifisch ist.

7. Verfahren nach einem der Ansprüche 3 bis 6, **dadurch gekennzeichnet, dass** das am Server-Computer gespeicherte Datenobjekt der ermittelten Vollanzeige (14) und die ermittelten Polygonkoordinaten (7, 10) als mögliche Position der angebotenen Immobilie über eine Input-/Output-Schnittstelle, vorzugsweise über das Internet, an einen Frontend-Server (2) übermittelt und dort zur weiteren Verarbeitung gespeichert und/oder grafisch ausgegeben werden.

8. Verfahren nach einem der Ansprüche 6 oder 7, **dadurch gekennzeichnet, dass** als Art der Nähenangabe ein Punkt von Interesse, eine Straßenkreuzung oder der Name einer Linie oder Station des öffentlichen Verkehrs, optional mit einer Distanzangabe, herangezogen wird.

9. Verfahren nach einem der Ansprüche 1 bis 8, **dadurch gekennzeichnet, dass** die topologische Typenhierarchie (3) im Server-Computer (1) in Form einer hierarchischen Baumstruktur oder eines Graphen abgespeichert ist, wobei die betrachteten topologischen Typen nach einer hierarchischen Ordnung sortiert sind, wobei absteigend von einem höchsten topologischen Typ jedem Typ zumindest ein übergeordneter Typ sowie gegebenenfalls untergeordnete Typen zugeordnet sind.

10. Verfahren nach einem der Ansprüche 6 bis 9, **dadurch gekennzeichnet, dass** zur Erweiterung der aus den Adressangaben identifizierten Polygonkoordinaten (7) um die aus den Nähenangaben identifizierten Polygonkoordinaten (10) eine konkave Hülle um die identifizierten Polygonkoordinaten (7, 10) gebildet wird, wobei vorzugsweise Funktionen eines externen geografischen Informationssystems eingesetzt werden.

11. Verfahren nach einem der Ansprüche 6 bis 10, **dadurch gekennzeichnet, dass** bei der Erweiterung der aus den Adressangaben identifizierten Polygonkoordinaten um die aus den Nähenangaben identifizierten Polygonkoordinaten eine Pufferzone (11) um den Überschneidungsbereich herangezogen wird, wobei die Größe der Pufferzone (11) in Abhängigkeit von den Nähenangaben und/oder in Abhängigkeit von weiteren im Text identifizierten Merkmalen, insbesondere einer identifizierten Distanzangabe, bestimmt wird.

12. Computerprogrammprodukt, umfassend Anweisungen, die bei Ausführung auf einem Server-Computer (1) diesen zur Durchführung eines Verfahrens gemäß einem der Ansprüche 1 - 11 veranlassen.

13. Computersystem, umfassend einen Server-Computer (1) mit einer topologischen Typenhierarchie (3) und einer Geotopologie-Datenbank (4) sowie ein computerlesbares Speichermedium mit Anweisungen, welche den Server-Computer dazu veranlassen, ein Verfahren nach einem der Ansprüche 1 - 11 auszuführen.

14. Computersystem nach Anspruch 13, umfassend einen Frontend-Server (2), **dadurch gekennzeichnet, dass** die vom Server-Computer (1) ermittelten Polygonkoordinaten (7, 10) an den Frontend-Server (2) übermittelt und dort gespeichert, auf einem Anzeigegerät grafisch ausgegeben und/oder weiter verarbeitet werden.

15. Tragbares elektronisches Gerät, umfassend eine Datenverarbeitungseinheit, einen Datenspeicher, eine Kommunikationseinheit, eine Anzeigeeinheit sowie eine vorzugsweise als GPS-Empfänger ausgeführte Lokalisierungseinheit, **dadurch gekennzeichnet, dass** das Gerät über die Kommunikationseinheit einen Server-Computer (1) zur Ausführung eines Verfahrens nach einem der Ansprüche 1 bis 11 veranlasst, die ermittelten Polygonkoordinaten (7, 10) entgegennimmt, durch Abfrage der Lokalisierungseinheit eine Distanz des Geräts zu den Polygonkoordinaten (7, 10) berechnet, und auf Grundlage der berechneten Distanz Informationen, insbesondere über in der Nähe des Geräts befindliche Immobilien, auf der Anzeigeeinheit darstellt.
